# EUROPEAN PATENT APPLICATION

(11) **EP 4 462 291 A1**
(43) Date of publication of application: **13.11.2024**
(21) Application number: 24174604.9
(22) Date of filing: 07.05.2024
(51) Int. Cl.: G06F 21/52, G06F 9/30, G06F 12/14, G06F 21/53, G06F 21/74, G06F 21/78

(54) **METHOD AND DATA PROCESSING SYSTEM FOR PROTECTING ACCESS TO A MEMORY**

(30) Priority: 09.05.2023 US 202318314207
(71) Applicant: NXP B.V., 5656 AG Eindhoven (NL)
(72) Inventor: Medwed, Marcel, 5656AG Eindhoven (NL); Schumm, Lorenz, 5656AG Eindhoven (NL)
(74) Representative: Krott, Michel

(57) **Abstract**

A method is provided to protect access to a memory in a data processing system. For each application of a plurality of applications, there is a fetch secret, a load secret, and a store secret. A fetch tweak, a load tweak, and a store tweak is computed for each application as a combination of one or more of the fetch secret, the load secret, and the store secret. Data to be stored in the memory is encrypted using the store tweak, and data to be retrieved from the memory is decrypted using the load tweak. Only a software security monitor of the data processing system knows the fetch secret, and each application knows its own load and store secrets. All three of the fetch secret, store secret, and the load secret have to be switched for a context switch in the data processing system.

## Description

### Background

### Field

This disclosure relates generally to data processing, and more particularly, to a method and data processing system for protecting access to a memory.

### Related Art

There are many different types of attacks against cryptographic devices and integrated circuits. One of type of attack is a fault injection attack. The goal of a fault injection attack is to change the normal behavior of the device while the device is performing its function by inducing a fault in the device. As a result of a fault injection attack, the device may skip one or several instructions, execute a different instruction instead of the one that is in memory, use wrong data, or have one or several bits changed in memory. Because of the fault the device may skip security checks during a secure boot or authentication process. The device may also deliver wrong results of a computation that can be used to break its security, e.g., extract cryptographic keys or passwords from its memory.

An important factor in modern software security is isolation. One form of isolation used to protect sensitive applications is provided using enclaves, also called secure enclaves. Multiple applications can be isolated from each other by compartmentalizing the applications using the enclaves. A software security monitor may be used to provide the security. Several goals can be accomplished using compartmentalization. For example, all data within an enclave is protected against access, even from entities having higher privileged levels, like an operating system (OS). Also, lateral movement of an application from one enclave to another is greatly restricted. That is, any successful attack against an enclave is contained and cannot spread. The isolation of these enclaves is either done by logical access control or by cryptographic isolation. It has been shown that pure logical isolation is susceptible to fault injection attacks. However, even cryptographic isolation might not give guarantees that a fault attack on the security monitor of a data processing system cannot break the isolation.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates memory isolation using physical memory protection (PMP) according to the prior art.
FIG. 2 illustrates memory isolation using different secrets for each application.
FIG. 3 illustrates a flow diagram of how to select a secret for memory encryption according to an embodiment.
FIG. 4 illustrates a conceptual block diagram of how processor state is used for memory encryption according to an embodiment.
FIG. 5 illustrates a sequence diagram of an example attack on a security monitor during a context switch according to an embodiment.
FIG. 6 illustrates a method to protect access to a shared memory in accordance with an embodiment.

### Detailed Description

Generally, there is provided, a method to protect access to a memory in a data processing system from an attack. The attack may be, for example, a fault injection attack. The data processing system includes a processor, a plurality of applications that are configured to run on the processor, a memory, and a security monitor. The security monitor controls security of the data processing system and helps to provide protection against adversaries inside untrusted software such as applications and operating systems. The memory may include a plurality of memory regions. Each of the memory regions may be protected by a secret (key). In one embodiment, a tweak may be used to modify the cipher used to access the memory regions. The plurality of memory regions may include memory regions that are shared by the plurality of applications and memory regions that are exclusive to an application. Each application of the plurality of applications requires at least some access to one or more memory regions of the memory. According to an embodiment, access to the memory is protected using a fetch secret, a load secret, and a store secret for each application of the plurality of applications. A fetch tweak, a load tweak, and a store tweak are computed for each application of the plurality of applications as a combination of one or more of the fetch secret, load secret, and store secret. For example, in one embodiment, the fetch secret functions as the fetch tweak. The fetch tweak is known only to the security monitor. The load tweak may be computed from a combination of the fetch secret and the load secret. The store tweak may be derived as a combination of the fetch secret and the store secret. Each time there is a context change to a different application, the fetch, load, and store secrets are changed to a different set of fetch, load, and store secrets. The security monitor needs to change all three secrets for the application of a new privilege level to be operable. In one embodiment, the tweaks are automatically derived by hardware. During operation of the processor, the fetch tweak is used to decrypt instructions from memory in response to an instruction fetch request. The store tweak is used to encrypt data to be stored in the memory in response to a store instruction. The load tweak is used to decrypt data to be retrieved from the memory in response to a load instruction.

Using a combination of the load and store secrets with the fetch secret to compute the load and store tweaks for each application as described provides protection against a fault injection attack because all three secrets are required to switch for each context switch. The resulting tweaks used for loading and storing are implicitly bound to an application.

In accordance with an embodiment, there is provided a method to protect access to a memory in a data processing system, the method including: providing a plurality of applications, each of the plurality of applications configured to run on a processor, each application requiring access to the memory; storing a fetch secret, a load secret, and a store secret for each application of the plurality of applications; and computing a fetch tweak, a load tweak, and a store tweak for each application of the plurality of applications as a combination of one or more of the fetch secret, the load secret, and the store secret, wherein during instruction execution by the processor, data to be stored in the memory is encrypted using the store tweak, and data to be retrieved from the memory is decrypted using the load tweak. The load tweak may be derived as a combination of the fetch secret and the load secret, and the store tweak is derived from a combination of the fetch secret and the store secret. The load and store secrets may be combined with the fetch secret using an exclusive OR (XOR) operation. Storing the fetch secret, the load secret, and the store secret for each application may further include storing a different fetch secret, load secret, and store secret for each application. The fetch secret may only be known to a security monitor of the data processing system. The method may further include switching, by a security monitor, the fetch secret, the load secret, and the store secret each time the shared memory is accessed by a different application having a different privilege level. The fetch secret, the load secret, and the store secret may be stored in hardware registers of the processor. Computing the fetch tweak, the load tweak, and the store tweak may further include modifying the fetch tweak, the load tweak, and the store tweak with a physical address of a memory access to the memory. The fetch tweak may be used to decrypt instructions from memory in response to an instruction fetch request. The method may further include selecting a fetch secret, a load secret, and a store secret for an application of the plurality of applications depending on a privilege mode of the application. The method may further include managing the fetch secrets, the load secrets, and the store secrets for each application of the plurality of applications using a dedicated hardware block of the processor to automatically compute a fetch tweak, a load tweak, and a store tweak for an access to the memory based on an address range of a memory region of the memory.

In another embodiment, there is provided, a data processing system including: a processor configured to execute instructions for a plurality of applications, the processor including a plurality of hardware registers for storing a fetch tweak, a load tweak, and a store tweak for each application of the plurality of applications, wherein each of the fetch tweak, the load tweak, and the store tweak for each application of the plurality of applications is a combination of one or more of a fetch secret, a load secret, and a store secret for each application of the plurality of applications; a memory accessible to each application of the plurality of applications; and a memory encryption engine coupled to the memory, the memory encryption engine configured to, during instruction execution by the processor, encrypt data to be stored in the memory using the store tweak, and decrypt data to be retrieved from memory using the load tweak. The memory encryption engine may provide decrypted data to registers of the processor. The load tweak may be derived as a combination of the fetch secret and the load secret, and the store tweak may be derived from a combination of the fetch secret and the store secret. The load and store secrets may be combined with the fetch secret using an exclusive OR (XOR) function. A different fetch secret, load secret, and store secret may be stored for each privilege level. The security monitor may be responsible for security of the data processing system, and wherein the fetch secret may only be known to the security monitor. The data processing system may further include modifying the fetch tweak, the load tweak, and the store tweak with a physical address of a memory access to the memory. On a context change from an old context to a new context, the security monitor may change an old fetch secret, load secret, and store secret to a new fetch secret, load secret, and store secret associated with the new context. The fetch secret, load secret, and store secret for an application of the plurality of applications may depend on a privilege level of the application.

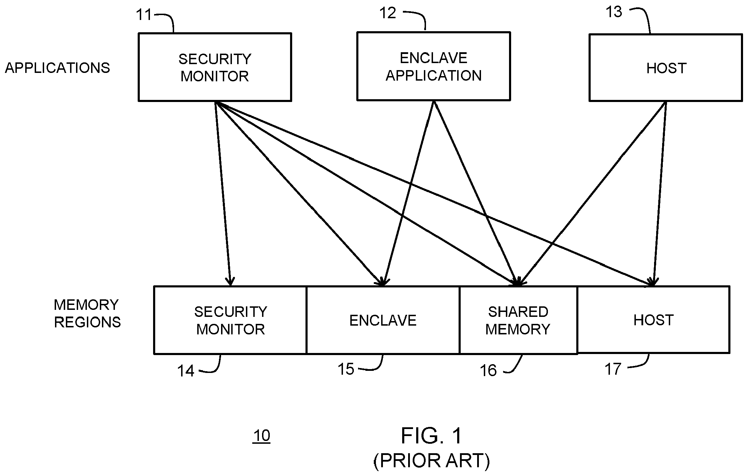

FIG. 1 illustrates memory isolation in enclave system 10 according to the prior art. Secure enclave systems require some security monitoring running in a relatively higher privilege level. Memory isolation is provided for different applications using physical memory protection (PMP). PMP defines physical memory regions and specifies memory access regions in firmware. As a simple example, the applications include security monitor 11, enclave 12, and host 13. Host 13 may be an operating system (OS). Each of the applications has access to one or more memory regions, such as memory regions 14 - 17. Memory access rights in enclave system 10 are managed by security monitor (SM) 11. As can be seen, security monitor 11 has access to all the memory regions. Enclave 12 has its own memory region 15, and host 13 has its own memory region 17. All of the applications have access to at least a portion of shared memory region 16. Security monitor 11 also performs context switching between applications, which includes saving the state of the old application and loading the state of the new application. A fault injection attack can break isolation guarantees in enclave system 10. In a simple example, during a context switch, security monitor 11 deactivates a memory window of the old application before switching to the new context. If the deactivation of the memory window of the old application does not take place because of the fault injection attack, the new application can access the data of the previous application.

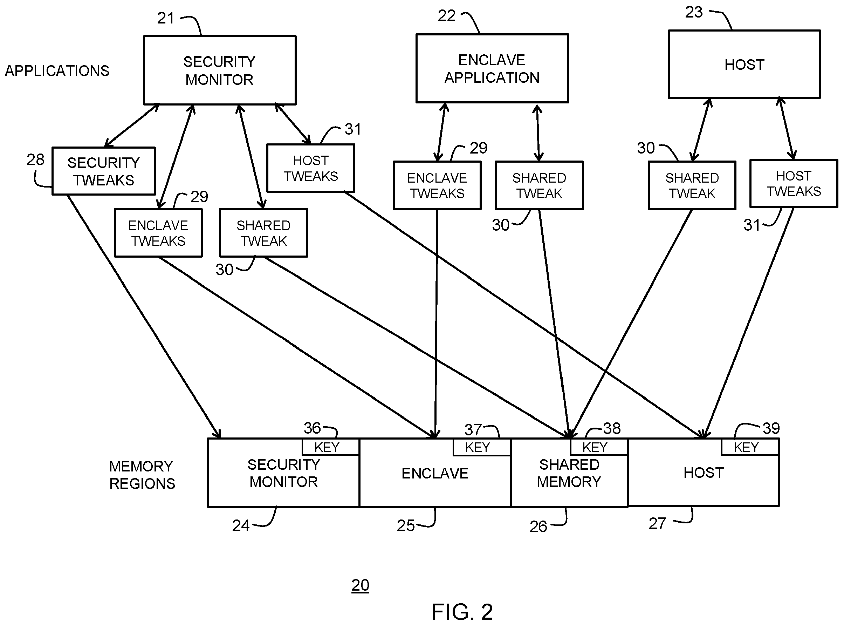

FIG. 2 illustrates memory isolation in enclave system 20 for a data processing system using memory encryption and different secrets according to an embodiment. In one embodiment, a processor of the data processing system may include a RISC-V processing core. In other embodiments, another data processing architecture may be used. The data processing system may be implemented on one or more integrated circuits. Also, the data processing system may be an embedded data processing system in a larger system for performing a function. The larger system may be, e.g., an automobile or an appliance. The embedded data processing system may be, e.g., a microcontroller or a microprocessor. Enclave system 20 includes different contexts, also called applications, each running on the same hardware. The applications in enclave system 20 may include applications such as security monitor 21, enclave application 22, and host 23. Security monitor 21 may be implemented in software and run at a higher privilege level. Security monitor 21 manages isolation between the applications. When switching from one application to another application, the security monitor performs a context switch.

The applications may have different security, or privilege, levels. For example, according to an embodiment, security monitor 21 may have the highest privilege level called a machine (M-mode) privilege level. Enclave application 22 and host 23 may have the next highest privilege level called a supervisor (S-mode) privilege level, and user applications (not shown) may have a lowest privilege level called user (U-mode) privilege level. Other data processing systems may use a different system of security levels. A memory is provided having a plurality of memory regions 24 - 27. The memory can be any type of volatile or non-volatile memory. The memory regions may be contiguous regions of a single memory or a plurality of separate memories. Each of the memory regions may be assigned a key, such as keys 36 - 39. Memory region 24 is provided for the exclusive use of security monitor 21. Security monitor 21 has access to all the memory regions using separate tweaks for each one. That is, security tweaks 28 are used with key 36 to access memory region 24, enclave tweaks 29 are used with key 37 to access enclave memory region 25, shared tweak 30 is used with key 38 to access shared memory 26, and host tweaks 31 are used with key 39 to access host memory region 27. Enclave application 22 uses enclave tweaks 29 and shared tweak 30 to access enclave memory region 25 and shared memory region 26, respectively. Likewise, host 23 uses shared tweak 30 to access shared memory 26 and host tweaks 31 to access host memory region 27.

In the illustrated embodiment, the applications use the same tweaks if accessing the same memory region. For example, shared tweak 30 is the same for security monitor 21, enclave application 22, and host 23. When using the same key and the same tweak, encryption/decryption are also the same. However, the way the tweaks are computed may be different. For instance, if the host accesses the shared memory for a read operation, the host computes shared_read_tweak as host_fetch_secret xor host_shared_read_secret. If the enclave accesses the shared memory, the enclave uses shared_read_tweak as enclave_fetch_secret xor enclave_shared_read_secret. Also, security tweaks, enclave tweaks, host tweaks usually comprise two tweaks, namely fetch and read/write, whereas the shared tweak usually only comprises one tweak, namely read/write. Note that in one embodiment it is necessary to distinguish between read and write tweaks because when data is copied from one memory region to another memory region, the tweaks are different.

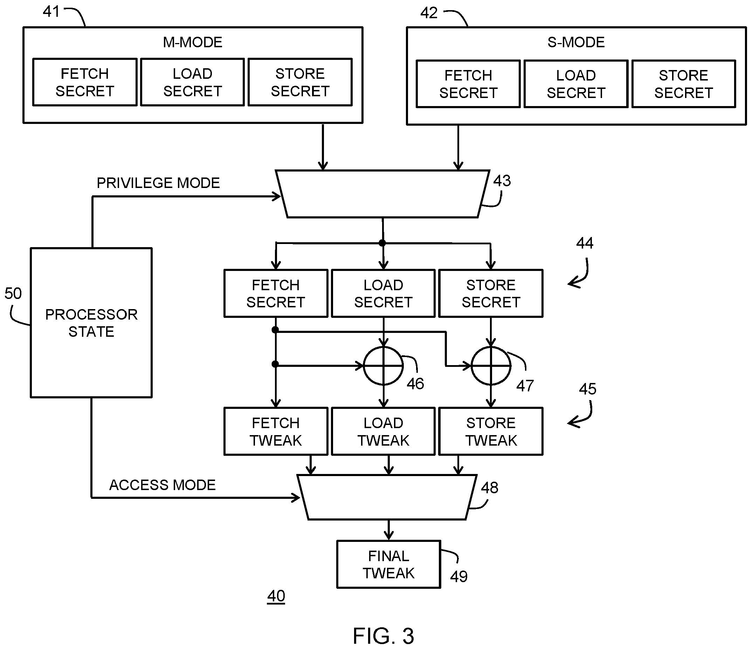

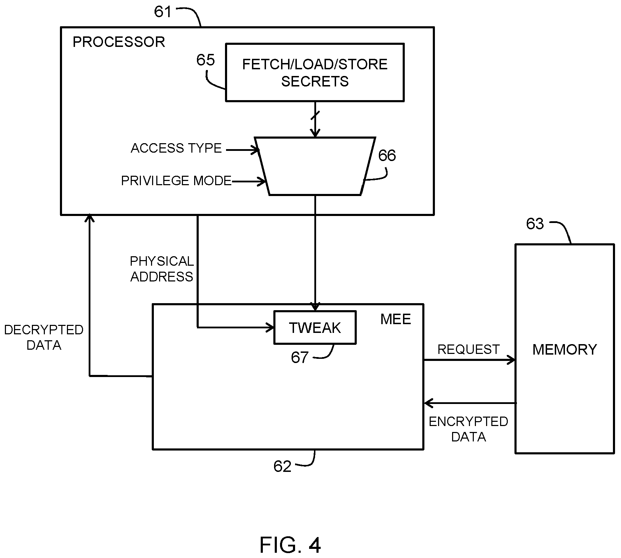

FIG. 3 illustrates a flow diagram of method 40 for selecting a secret for memory encryption according to an embodiment. Method 40 may be used to generate the tweaks described and illustrated in enclave system 20 of FIG. 2. In the described embodiment, a different tweak is used for fetch, load and store instructions. Each privilege level has a fetch secret, a load secret, and a store secret. For example, in FIG. 3, the machine privilege level (M-mode) 41 of the security monitor and the supervisor privilege level (S-mode) 42 each include separate fetch, load, and store secrets. These secrets may be stored in hardware registers of a processor, such as processor 61 in FIG. 4. In one example, the hardware registers holding the secrets are only writable but not readable. In another embodiment, the fetch, load, and store secrets may be stored in a different memory location. A processor (not shown) selects a set of fetch, load, and store secrets based on a processor state 50, as illustrated by a control signal labeled "PRIVILEGE MODE" to a control terminal of a multiplexer 43. Other embodiments may select a set of fetch, load, and store secrets differently. The selected fetch, load, and store secrets 44 are output from multiplexer 43 and are used to generate fetch, load, and store tweaks 45. In accordance with one embodiment, fetch, load, and store tweaks 45 for accessing memory regions are derived from fetch, load and store secrets 44 by a combination of fetch, load, and store secrets 44. For example, in one embodiment, as illustrated in FIG. 3, the fetch tweak is equivalent to the fetch secret. Both the fetch tweak and the fetch secret are only known to the security monitor of enclave system 40, such as for example, security monitor 21 in FIG. 2. However, the load tweak is a function of the fetch secret and load secret. For example, in one embodiment, exclusive OR (XOR) logic gate 46 is used to combine the fetch secret with the load secret of selected secrets 44 to derive the load tweak of derived tweaks 45. Setting the processor's load secret to 0 results in all load instructions using the fetch secret for encryption. Analogously, the store tweak of derived tweaks 45 is derived from a combination of the fetch secret and the store secret of selected secrets 44 using XOR 47. In other embodiments the derived tweaks 45 may be derived using a different function. For example, any operation capable of combining two values into a third value of equal size in a deterministic and reversible manner can be used. Other example functions include modular addition or encryption, although some other functions may require small adaptions of method 40 to operate. The use of the XOR function to derive the tweaks is fast and easy to implement in hardware. Processor state 50 selects one of tweaks 45 depending on the instruction being executed using an access mode signal "ACCESS MODE" with multiplexer 48. The processor may include separate hardware tweak registers for the privilege mode in which the security monitor is running. Using hardware registers in the processor provides immediate access to valid tweaks when trapping from, e.g., S-mode to M-mode due to an exception or interrupt. Similarly, the security monitor needs to be able to setup all tweaks for S-mode upfront, but the tweaks must only become active when switching to a specific application. Memory encryption is used to isolate and protect the memory regions of each application from adversaries. Data to be stored in the memory is encrypted using the store tweak, and data to be retrieved from memory is decrypted using the load tweak. The selected tweak becomes final tweak 49 that is used during the access to a memory region. For example, final tweak 49 may be used as one of tweaks 28 - 31 in FIG. 2.

Since each application will always use the same fetch secret, the application does not have to know its own fetch secret but only the various load and store secrets it uses to access different memory regions. The fetch secret is solely known to the security monitor and is used as the fetch tweak. That is, it is the tweak used in a tweakable block cipher when fetching data from, e.g., code memory. One example of a tweakable block cipher involves operating a standard block cipher in xor-encrypt-xor (XEX) mode. However, dedicated tweakable block ciphers also exist. The load and store tweaks formed by an XOR combination between the fetch secret and the load and store secrets are known to the application and to the security monitor. The application only knows the load and store secrets that are needed to compute a certain load and store tweak, given its own fetch secret. Therefore, an application can arbitrarily switch between different memory regions. However, because the fetch secret is unknown to the application, a leak of the load and store secrets by the application does not breach security if the secrets are leaked to another application. Thus, the tweaks used for loading and storing are implicitly bound to an application.

Also, the security monitor needs to switch all three secrets, such that a new application during a context switch is operable. If the security monitor only switches the fetch secret and leaves the load secret unchanged, then the load tweak would not match either the old application or the new application. If neither the fetch secret nor the load secret are changed during a context switch, then the new application could access the data of the old application. However, since the fetch secret is wrong, the first accessed instruction within the new application would be decrypted to undecipherable gibberish, or raise an exception, depending on the implementation.

Since an application may need to switch the secrets to access, for example, a shared memory region, the application needs to know those secrets. However, in the illustrated embodiment, since the load and store secrets are combined with the fetch secret, the secret that an application is given to access the shared memory is the application's fetch secret combined with the actual tweaks used for the shared memory region. On a context switch, the security monitor needs to switch all three secrets in order for a new application after the context switch to have access to a memory region corresponding to the secrets. In case of a fault attack two scenarios can take place: either the fetch secret remains unchanged and a new application, after a context switch, cannot execute anymore; or the load or store secret remains unchanged, but the corresponding load and store tweaks also do not match any valid tweak, because the fetch secret changed. This results in the fault injection attack being unsuccessful. Additionally, since an application only needs to be aware of the load and store secrets but not of the load and store tweaks, the load and store tweaks cannot be leaked by the application but can only be leaked by the security monitor of the system.

FIG. 4 illustrates a conceptual block diagram of how processor state is used for memory encryption according to an embodiment. FIG. 4 shows processor 61, memory encryption engine (MEE) 62, and memory 63. As described above regarding the description of FIG. 3, processor 61 stores fetch, load, and store secrets 65 in hardware registers of processor 61. The fetch, load, and store secrets are selected to derive fetch, load, and store tweaks depending on privilege mode (PRIVILEGE MODE) (e.g., S-mode, U-mode or M-mode) and an access type (ACCESS TYPE) as illustrated by block 66. A final derived tweak 67 is provided to MEE 62 where it is used for encrypting and decrypting data from memory 63. For example, upon a request (REQUEST), encrypted data is retrieved from memory 63 and decrypted by MEE 62 before being provided to processor 61. Processor 61 may assign the decrypted data to a virtual address space. In another embodiment, the secrets are not managed by a software security monitor but by a dedicated hardware block (not shown) which may derive the secrets automatically based on application specific information, e.g., the code memory address range. Also, the accessed physical address (PHYSICAL ADDRESS) of memory 63 may be used to modify tweak 67.

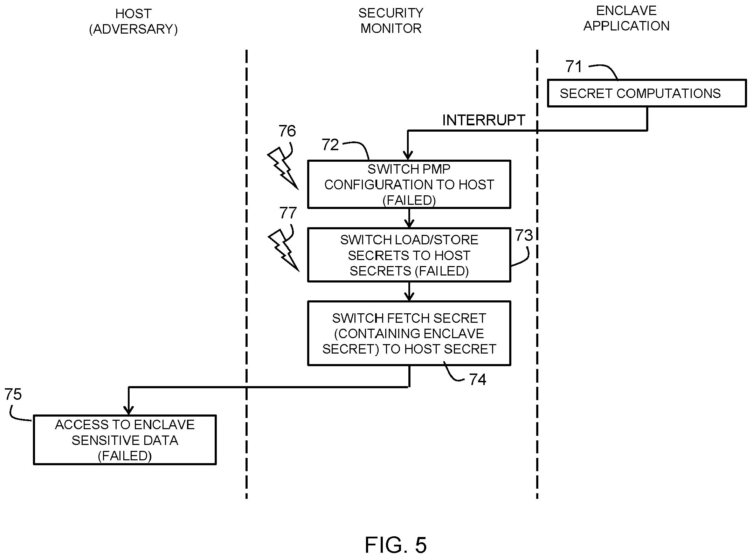

FIG. 5 illustrates a sequence diagram of an example attack on a security monitor during a context switch according to an embodiment. In a normal context switch from an old application to a new application, without a fault injection attack, an interrupt is generated and the security monitor causes the fetch, load, and store secrets to switch to the fetch, load and store secrets of the new application. FIG. 5 illustrates a fault injection attack with the goal of the fault injection attack being to gain access to secret data stored in an enclave. As mentioned above, according to an embodiment, in case of a fault injection attack two scenarios can take place: either the fetch secret remains unchanged and the new application after a context switch cannot execute because it does not have access to its memory region; or the load or store secret remains unchanged so that the corresponding load or store tweaks do not match any valid tweak because the fetch secret changed and the new application does not have access to the memory region. Either scenario causes the fault injection attack to fail. Additionally, since the application only needs to be aware of the secrets but not of the tweaks, the tweaks cannot be leaked by the application but only by the security monitor. As an example, FIG. 5 includes a data processing system having a host, a security monitor, and an enclave application. A fault injection attack is performed on the security monitor during a context switch from the enclave application to the host. On the context switch from the enclave application to the host, the enclave application is executing secret computations 71 when an interrupt is generated. In response to the interrupt, the security monitor causes a context switch from the enclave application to the host, which is the adversary in this example. The security monitor needs to switch all three fetch, load, and store secrets to complete the context switch to the host as described above. At step 72, the security monitor switches a PMP configuration to the host, but an injected glitch 76 causes the enclave memory window to stay open. At step 73, the security monitor attempts to switch load and store secrets to host secrets but another injected glitch 77 causes the attempt to fail. At step 74, the security monitor successfully switches the fetch secret to the host. This means the load and store secrets were not switched to host secrets but the fetch secret was switched to the host fetch secret. Step 75 shows that the attempted access to sensitive data of the enclave by the host failed because the load and store secrets remained those of the enclave, the effective load/store tweak does not match the tweak for the enclave.

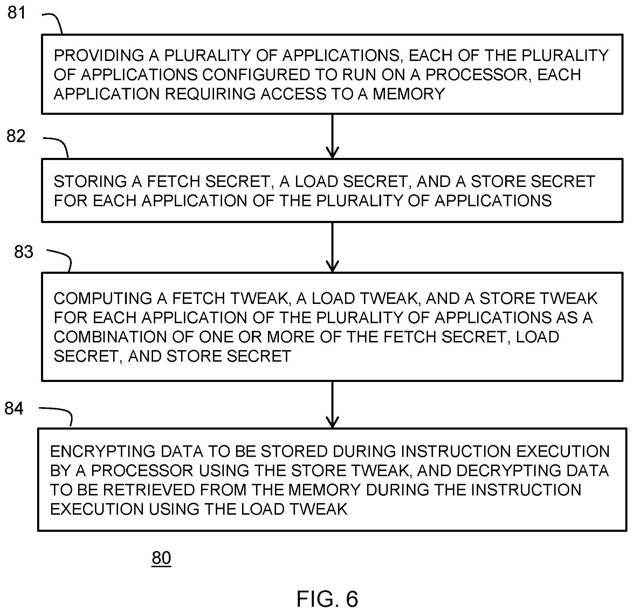

FIG. 6 illustrates method 80 for protecting access to a memory according to an embodiment. At step 81, the memory may be a memory region that is shared by a plurality of applications that are configured to run on a processor. At step 82, a fetch secret, a load secret, and a store secret for each of the applications are stored. In one embodiment, the secrets are stored in registers of the processor. At step 83, a fetch tweak, a load tweak, and a store tweak for each application of the plurality of applications are computed as a combination of one or more of the fetch secret, load secret, and store secret. At step 84, during instruction execution by the processor, data to be stored in the memory is encrypted using the store tweak, and data to be retrieved from the memory is decrypted using the load tweak.

Various embodiments, or portions of the embodiments, may be implemented in hardware or as instructions on a non-transitory machine-readable storage medium including any mechanism for storing information in a form readable by a machine, such as a personal computer, laptop computer, file server, smart phone, or other computing device. The non-transitory machine-readable storage medium may include volatile and non-volatile memories such as read only memory (ROM), random access memory (RAM), magnetic disk storage media, optical storage medium, flash memory, and the like. The non-transitory machine-readable storage medium excludes transitory signals.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A method to protect access to a memory in a data processing system, the method comprising:
providing a plurality of applications, each of the plurality of applications configured to run on a processor, each application requiring access to the memory;
storing a fetch secret, a load secret, and a store secret for each application of the plurality of applications; and
computing a fetch tweak, a load tweak, and a store tweak for each application of the plurality of applications as a combination of one or more of the fetch secret, the load secret, and the store secret, wherein during instruction execution by the processor, data to be stored in the memory is encrypted using the store tweak, and data to be retrieved from the memory is decrypted using the load tweak.

2. The method of claim 1, wherein the load tweak is derived as a combination of the fetch secret and the load secret, and the store tweak is derived from a combination of the fetch secret and the store secret.

3. The method of claim 2, wherein the load and store secrets are combined with the fetch secret using an exclusive OR (XOR) operation.

4. The method of any preceding claim, wherein storing the fetch secret, the load secret, and the store secret for each application further comprises storing a different fetch secret, load secret, and store secret for each application.

5. The method of any preceding claim, wherein the fetch secret is only known to a security monitor of the data processing system.

6. The method of any preceding claim, further comprising switching, by a security monitor, the fetch secret, the load secret, and the store secret each time the shared memory is accessed by a different application having a different privilege level.

7. The method of any preceding claim, wherein the fetch secret, the load secret, and the store secret are stored in hardware registers of the processor.

8. The method of any preceding claim, wherein computing the fetch tweak, the load tweak, and the store tweak further comprises modifying the fetch tweak, the load tweak, and the store tweak with a physical address of a memory access to the memory.

9. The method of any preceding claim, wherein the fetch tweak is used to decrypt instructions from memory in response to an instruction fetch request.

10. The method of any preceding claim, further comprising selecting a fetch secret, a load secret, and a store secret for an application of the plurality of applications depending on a privilege mode of the application.

11. The method of claim 10, further comprising managing the fetch secrets, the load secrets, and the store secrets for each application of the plurality of applications using a dedicated hardware block of the processor to automatically compute a fetch tweak, a load tweak, and a store tweak for an access to the memory based on an address range of a memory region of the memory.

12. A data processing system comprising:
a processor configured to execute instructions for a plurality of applications, the processor including a plurality of hardware registers for storing a fetch tweak, a load tweak, and a store tweak for each application of the plurality of applications, wherein each of the fetch tweak, the load tweak, and the store tweak for each application of the plurality of applications is a combination of one or more of a fetch secret, a load secret, and a store secret for each application of the plurality of applications;
a memory accessible to each application of the plurality of applications; and
a memory encryption engine coupled to the memory, the memory encryption engine configured to, during instruction execution by the processor, encrypt data to be stored in the memory using the store tweak, and decrypt data to be retrieved from memory using the load tweak.

13. The data processing system of claim 12, wherein the memory encryption engine provides decrypted data to registers of the processor.

14. The data processing system of claim 12 or 13, wherein the load tweak is derived as a combination of the fetch secret and the load secret, and the store tweak is derived from a combination of the fetch secret and the store secret.

15. The data processing system of claim 14, wherein the load and store secrets are combined with the fetch secret using an exclusive OR (XOR) function.
